# EUROPEAN PATENT APPLICATION

(11) **EP 2 957 970 A1**
(43) Date of publication of application: **23.12.2015**
(21) Application number: 14751471.5
(22) Date of filing: 12.02.2014
(51) Int. Cl.: G05B 19/05

(54) **CONTROLLER, TIME CHART CREATION DEVICE, COMPUTER PROGRAM, AND COMPUTER-READABLE INFORMATION STORAGE MEDIUM**

(30) Priority: 15.02.2013 JP 2013028441
(71) Applicant: Kabushiki Kaisha Yaskawa Denki, Kitakyushu-shi, Fukuoka 806-0004 (JP)
(72) Inventor: HIROSE, Kenichi, Kitakyushu-shi Fukuoka 806-0004 (JP); NAGATA, Takeshi, Kitakyushu-shi Fukuoka 806-0004 (JP)
(74) Representative: Grünecker Patent- und Rechtsanwälte PartG mbB
(86) International application number: PCT/JP2014/053208
(87) International publication number: WO 2014/126109

(57) **Abstract**

Each of devices is caused to conduct an operation with an improved degree to which a timing expressed by a time chart is reflected on actual control when the devices are controlled based on a time chart.

Provided is a controller (2) configured to control a device including a servo axis based on a time chart, including: a time chart execution unit (25) configured to output a control signal serving as a signal for controlling an operation of the device based on a description for controlling the operation of the device included in the time chart; an internal time counter (24c) configured to count an internal time corresponding to a time on a time axis of the time chart; and an internal time stopper (24d) configured to stop, for at least one device as the device, the counting of the internal time conducted by the internal time counter until an operation of the at least one device is finished when the operation of the at least one device has not been finished after a scheduled finish time point of the operation of the at least one device on the time chart.

## Description

### Technical Field

The present invention relates to a controller, a time chart creation apparatus, a computer program, and a computer-readable information storage medium.

### Background Art

In Patent Literature 1, there is disclosed a control program automatic creation apparatus for automatically creating a ladder program from a time chart.

Further, in Patent Literature 2, there is disclosed a technology for editing a time chart for an input device and an output device by using a personal computer, compiling time chart data into a machine language, and transmitting the compiled machine language to a processing apparatus through an interface.

### Citation List

### Patent Literature

[Patent Literature 1] JP 07-191717 A
[Patent Literature 2] JP 2003-228403 A

### Summary of Invention

### Technical Problem

An object to be achieved by the present invention is to cause each of devices to conduct an operation with an improved degree to which a timing expressed by a time chart is reflected on actual control when the devices are controlled based on a time chart.

### Solution to Problem

According to one aspect of the present invention, there is provided a controller configured to control a device including a servo axis based on a time chart, including: a time chart execution unit configured to output a control signal serving as a signal for controlling an operation of the device based on a description for controlling the operation of the device included in the time chart; an internal time counter configured to count an internal time corresponding to a time on a time axis of the time chart; and an internal time stopper configured to stop, for at least one device as the device, the counting of the internal time conducted by the internal time counter until an operation of the at least one device is finished when the operation of the at least one device has not been finished after a scheduled finish time point of the operation of the at least one device on the time chart.

Further, in a controller according to another aspect of the present invention, the internal time stopper stops the counting conducted by the internal time counter when the device includes a plurality of the devices and when an operation of any one of the plurality of the devices has not been finished.

Further, a controller according to another aspect of the present invention further includes a servo axis scheduled finish time point calculation unit configured to calculate a servo axis operation scheduled finish time point serving as a scheduled finish time point of an operation of the servo axis based on the description for controlling the operation of the servo axis included in the time chart.

Further, a controller according to another aspect of the present invention further includes an internal time halting unit configured to stop the counting of the internal time conducted by the internal time counter in accordance with a halt instruction set on the time chart, and restart the counting of the internal time conducted by the internal time counter in accordance with a halt cancellation signal.

Further, in a controller according to another aspect of the present invention, the internal time halting unit stops operations of all the servo axes in accordance with the halt instruction.

Further, according to one aspect of the present invention, there is provided a time chart creation apparatus to be connected to the controller, including at least one of: a servo axis operation scheduled finish time point calculation unit configured to calculate a servo axis operation scheduled finish time point serving as a scheduled finish time point of an operation of the servo axis included in the time chart; and a servo axis operation scheduled finish time point designation unit configured to designate the servo axis operation scheduled finish time point.

Further, according to one aspect of the present invention, there is provided a time chart creation apparatus to be connected to the controller, including a halt instruction setting unit configured to set the halt instruction on the time chart.

Further, according to one aspect of the present invention, there is provided a time chart creation apparatus to be connected to the controller, including a servo axis operation adding unit configured to conduct one operation at an arbitrary position in a time axis within a chart for describing an operation of the servo axis, to thereby add a description for controlling the operation of the servo axis using a waveform defined in advance to the time chart.

Further, according to one aspect of the present invention, there is provided a computer program for causing a computer to function as the time chart creation apparatus.

Further, according to one aspect of the present invention, there is provided a computer-readable information storage medium having the computer program stored thereon.

### Advantageous Effects of Invention

According to the aspects of the present invention, it is possible to cause each of the devices to conduct the operation with the improved degree to which the timing expressed by the time chart is reflected on the actual control when the devices are controlled based on the time chart.

### Brief Description of Drawings

FIG. 1 is a schematic diagram for illustrating an example of a device control system including a controller according to an embodiment of the present invention.
FIG. 2 is a block diagram for illustrating a physical configuration of a time chart creation apparatus.
FIG. 3 is a functional block diagram of a controller and a time chart creation apparatus according to a first embodiment of the present invention.
FIG. 4 is a diagram for illustrating an example of a time chart created by the time chart creation apparatus and executed by the controller.
FIG. 5 is a diagram for illustrating an actual operation of a device control system according to this embodiment based on the time chart illustrated in FIG. 4.
FIG. 6 is a diagram for illustrating an example of displaying an execution status of the time chart by a time chart display unit.
FIG. 7 is a flowchart for illustrating an operation conducted when the time chart is executed by the controller according to the first embodiment.
FIG. 8 is a functional block diagram of a controller and a time chart creation apparatus according to a second embodiment of the present invention.

### Description of Embodiments

A time chart is configured to describe a timing of an operation of each device with respect to a time axis, but even when the timing of the operation of each device is to be controlled based on the time chart, an actual operating time period of each device is not always as described in the time chart. However, no consideration has been given so far as to how to solve a lag between the timing of the operation of each device described in the time chart and the actual operating time period of each device when the timing of the operation of each device is to be controlled based on the time chart.

Further, from the viewpoint of the inventors of the present invention, there is a demand to halt, stop, and restart the operation of each device at an arbitrary timing in order to confirm the operation or for other such purposes when each device is automatically controlled by using a controller. Such a halt operation is not described in the time chart, and hence such a halt operation causes a lag between the timing of the operation of each device described in the time chart and the actual operating time period of each device.

Therefore, the inventors of the present invention have reached a device control apparatus and a device control method that are novel and inventive as a result of conducting intensive research and development regarding a technology for operating each device as intended by a creator of the time chart in consideration of the above-mentioned lag. Now, such a device control apparatus and a device control method are described in detail according to embodiments thereof.

### <Device control system according to the embodiments>

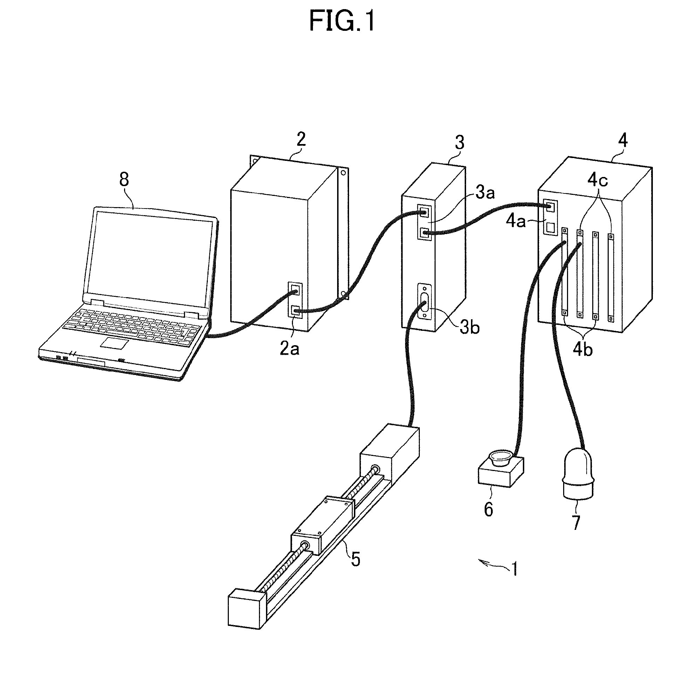

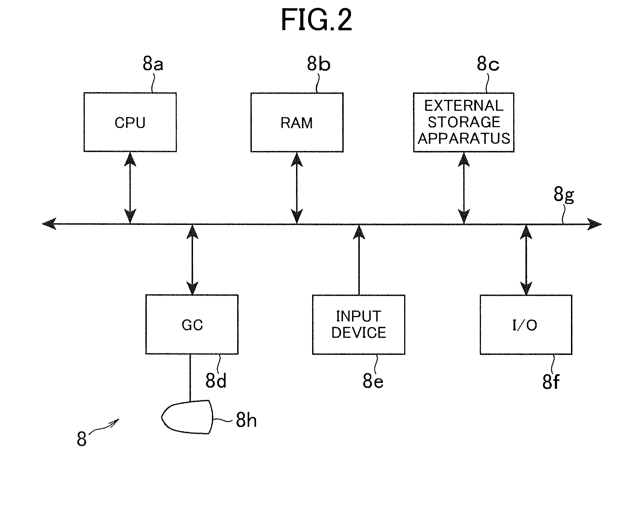

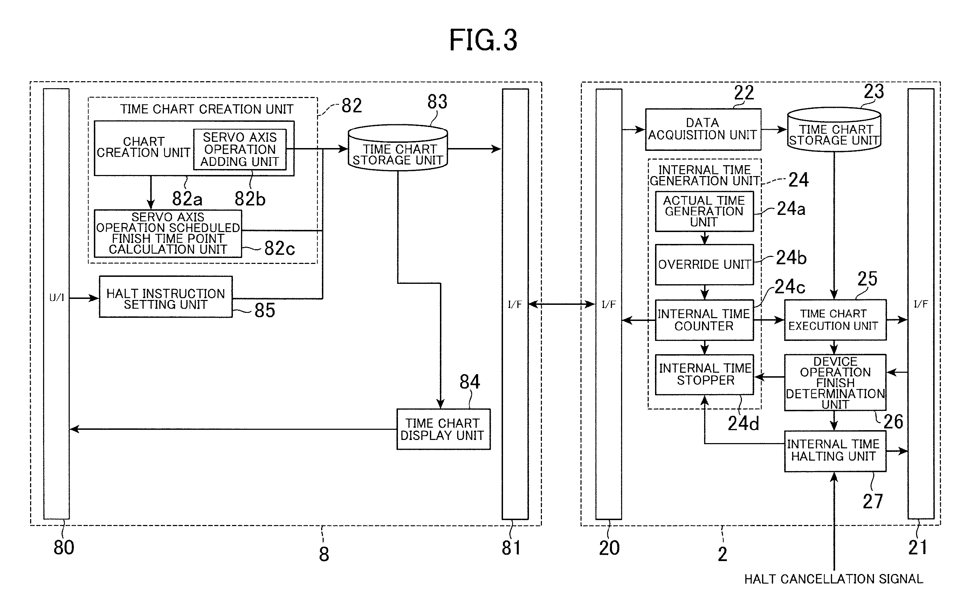

FIG. 1 is a schematic diagram for illustrating an example of a device control system 1 including a controller 2 according to the embodiments of the present invention. Note that, descriptions with reference to FIG. 3 and the subsequent figures are made separately between a first embodiment and a second embodiment of the present invention, but FIG. 1 and FIG. 2 are common to the embodiments. FIG. 1 is an illustration of the device control system 1 including the controller 2, a servo controller 3, an I/O unit 4, a linear slider 5, a switch 6, and a lamp 7 and a time chart creation apparatus 8 connected to the controller 2.

The controller 2 is a device for controlling an entirety of the device control system 1, and in this embodiment, is configured to control at least one device based on the time chart. Note that, the time chart herein means information describing the operation of the device connected to the controller 2 with respect to the time axis, which may be expressed in any form. Further, a servo axis such as the linear slider 5 driven through the servo controller 3 and input/output devices such as the switch 6 and the lamp 7 are both examples of the device to be controlled by the controller 2. The time chart to be executed by the controller 2 is created by the time chart creation apparatus 8, input to the controller 2 in the form of electronic data, and stored therein. The controller 2 is provided with an information communication connector 2a.

The servo controller 3 is constructed by integrating a servo amplifier for controlling a servomotor and a control circuit thereof, and is provided with an information communication connector 3a for connecting to another device such as the controller 2 and a servo connector 3b for connecting to a servo mechanism such as the linear slider 5. In this embodiment, the linear slider 5 is connected to the servo connector 3b as an example of the servo axis.

The linear slider 5 is a mechanism obtained by integrating the servomotor, an encoder, a ball screw coupled to an output shaft of the servomotor, and a slide table that is guided by a linear guide and driven by the ball screw, and the slide table is driven in accordance with an output from the servo controller 3. Note that, the servo axis is referred to as such by recognizing a mechanism driven by the servomotor as a power source with a focus on the servomotor.

The I/O unit 4 is a device including an information communication connector 4a for connecting to another device such as the controller 2 and a large number of input/output contacts for connecting to the input/output devices. The I/O unit 4 is provided with an input connector 4b and an output connector 4c as the input/output contacts, each of the input connector 4b and the output connector 4c including a large number of contacts for an input or an output (respectively referred to as "input contact" and "output contact"). The I/O unit 4 is configured to transmit an input status of the input contact included in the input connector 4b to the controller 2 via the information communication connector 4a and control a status of the output contact included in the output connector 4c in accordance with an instruction transmitted from the controller 2 via the information communication connector 4a in the same manner, and functionally serves to expand external input/output contacts for the controller 2. In this embodiment, as examples of the input/output device, the switch 6 serving as a mechanical switch of a normal open type (that is, A-contact) is connected to the input connector 4b of the I/O unit 4, and the lamp 7 is connected to the output connector 4c. Note that, here, the input/output contact represents a contact for inputting or outputting information based on a distinction between a high impedance and a low impedance, and the input/output device represents the device connected to the controller 2 through the input/output contact.

In this embodiment, as illustrated in FIG. 1, the controller 2, the servo controller 3, and the I/O unit 4 are allowed to communicate to/from one another by subjecting the information communication connectors 2a, 3a, and 4a to a cascade connection through cables.

The time chart creation apparatus 8 is an apparatus for assisting a user in creating the time chart to be executed by the controller 2, and in this embodiment, for receiving information transmitted from the controller 2 and monitoring the status of the device control system 1. The time chart creation apparatus 8 may be a dedicated apparatus, but, as illustrated in the figure, is realized by using a general computer to execute a computer program for causing the general computer to function as the time chart creation apparatus 8. Such a computer program may be stored in a computer-readable information storage medium such as various optical discs and semiconductor memories, and is preferably to be installed onto the computer from the medium. Alternatively, such a computer program may be downloaded onto the computer from various information communication networks such as the Internet, and may also be realized by a so-called cloud computing system in which a function of the time chart creation apparatus 8 is provided by a server located in a remote site through the information communication network.

FIG. 2 is a block diagram for illustrating a physical configuration of the time chart creation apparatus 8. The time chart creation apparatus 8 is a general computer, in which a central processing unit (CPU) 8a, a random-access memory (RAM) 8b, an external storage device 8c, a graphics controller (GC) 8d, an input device 8e, and an input/output (I/O) 8f are connected to one another by a data bus 8g so that the devices can exchange electric signals therebetween. The external storage device 8c is a device capable of statically recording information, such as a hard disk drive (HDD) or a solid state drive (SSD). Further, signals from the GC 8d are output and displayed as an image on a monitor 8h, such as a cathode ray tube (CRT) or a so-called flat panel display, by which the user visually recognizes the image. The input device 8e is a device, such as a keyboard, a mouse, or a touch panel, by which the user inputs information. The I/O 8f is an interface that allows the time chart creation apparatus 8 to exchange information with an external device. In this embodiment, the external device is the controller 2.

Note that, in the above descriptions, FIG. 1, and FIG. 2, descriptions and illustrations of other detailed components and wirings, for example, connections of a power source line and a ground wire, which are unnecessary for the description of this embodiment, are omitted for the sake of simplicity. Further, no particular limitations are imposed on a connection mode, a connector type, a type or a number of devices to be controlled, or the like, and a wide variety of variations are conceivable. In addition, for the operation of the device control system 1, the controller 2 may not necessarily be connected to the time chart creation apparatus 8, and the device control system 1 can operate without the time chart creation apparatus 8 as long as the time chart is transferred to the controller 2. Further, the time chart creation apparatus 8 may not necessarily be connected to the controller 2, and the time chart can be created by the time chart creation apparatus 8 alone.

### <Configurations of controller and time chart creation apparatus according to the first embodiment>

FIG. 3 is a functional block diagram of the controller 2 and the time chart creation apparatus 8 according to the first embodiment of the present invention.

The controller 2 includes an interface 20 connected to a side of the time chart creation apparatus 8 and an interface 21 connected to a side of each device to be controlled. The time chart created by the time chart creation apparatus 8 is acquired by a data acquisition unit 22 through the interface 20, and is stored in a time chart storage unit 23 in the form of the electronic data.

An internal time generation unit 24 generates an internal time serving as a time that defines a timing at which the controller 2 executes the operation of each device and that is described in the time chart. Then, the internal time is used as the time indicated in the time axis of the time chart.

The internal time is generated by an actual time generation unit 24a formed of an appropriate clock circuit or the like included in the internal time generation unit 24, and an internal time counter 24c counts the internal time by keeping adding a predetermined increment in synchronization with a timing at which an actual time, which progresses so as to correspond to the real time, makes progress.

Further, a progress speed of the internal time is adjusted relative to the actual time progressing so as to correspond to the real time based on an appropriate overriding factor by an override unit 24b. In this case, the overriding factor represents a ratio of the progress speed of the internal time to the progress speed of the actual time. For example, when the overriding factor is 0.8, the internal time slowly progresses at a rate of 80% relative to the actual time, and when the overriding factor is 1.2, the internal time quickly progresses at a rate of 120% relative to the actual time. When the overriding factor is 1, the progress speed of the internal time matches the progress speed of the actual time. The override unit 24b adjusts the progress speed of the internal time by adjusting intervals at which the internal time counter 24c counts the internal time or by adjusting a magnitude of the increment added to the internal time by the internal time counter 24c. Note that, the overriding factor is set by the user by the time chart creation apparatus 8 through the interface 20 or by using an arbitrary device such as an appropriate teaching pendant. Further, the generated internal time may be output to the time chart creation apparatus 8 through the interface 20 in order to monitor the operation of each device.

In addition, an internal time stopper 24d receives signals from a device operation finish determination unit 26 and an internal time halting unit 27, which are described later, and causes the internal time counter 24c to stop counting the internal time. This operation is to inhibit the internal time counter 24c from adding the increment to the internal time while a stop signal is being output from the internal time stopper 24d, and the internal time does not progress while the counting of the internal time is stopped. When the stop signal is no longer output from the internal time stopper 24d, the internal time counter 24c restarts counting the internal time.

A time chart execution unit 25 interprets the operation of each device described in the time chart stored in the time chart storage unit 23 based on the internal time counted by the internal time counter 24c, and outputs a control signal to each device through the interface 21 in order to execute the operation. Abasic operation of the time chart execution unit 25 is to output, when the internal time reaches a time point at which an operation is described in the time chart, the control signal for realizing the description.

The device operation finish determination unit 26 determines whether or not at least one device among the devices connected to the controller 2 has finished an actual operation thereof after a scheduled finish time point serving as a finish time point of the operation of the device on the time chart. This determination may be made based on whether or not a positioning completion signal is output from the controller for controlling the servo axis when the subject device is the servo axis, and when the subject device is the input device, based on whether or not the status of the input signal at the corresponding input contact matches the status at a finish time of the operation on the time chart. When the actual operation of the device has not been finished, the device operation finish determination unit 26 outputs a signal to the internal time stopper 24d, and the internal time stopper 24d stops the counting of the internal time. Further, in this embodiment, the scheduled finish time point is created in advance by the time chart creation apparatus 8, and is included in the information of the time chart.

Note that, the device to be subjected to the determination conducted by the device operation finish determination unit 26 may be an arbitrary one device, a plurality of devices, or all the devices. When only one device is subjected, a degree to which an operation described in the time chart is reflected on the actual operation can be improved for the device, and when a plurality of devices or all the devices are subjected, the actual operations of the plurality of devices or all the devices described in the time chart can be executed in synchronization. Note that, in this embodiment, the device operation finish determination unit 26 conducts the above-mentioned determination for all the devices connected to the controller 2, and hence the controller 2 stops the counting of the internal time when the operation of any one of the connected devices has not been finished even after the scheduled finish time point.

The internal time halting unit 27 outputs a signal to the internal time stopper 24d when the internal time reaches a time point at which a halt instruction is set and that is included in the time chart, and the internal time stopper 24d stops the counting of the internal time. At the same time, the internal time halting unit 27 outputs a hold signal to all servo axes through the interface 21. As a result, the operation of each servo axis is stopped even during execution thereof. Note that, the halt instruction is set on the time chart by a halt instruction setting unit 85 described later, but may be set, for example, in real-time through the user's input to the time chart creation apparatus 8 or the controller 2 during the execution of the time chart. On the other hand, when a halt cancellation signal is input to the internal time halting unit 27 from the outside, for example, an arbitrary switch or the time chart creation apparatus 8, or through the user's input or the like to the controller 2, the internal time halting unit 27 cancels the halt of the internal time, and stops outputting the signal to the internal time stopper 24d and the hold signal to the servo axis. Then, the counting of the internal time is restarted, and the operation of each servo axis whose execution has been halted is restarted from the status in which the operation was stopped.

The time chart creation apparatus 8 includes a user interface 80 and an interface 81 connected to the controller 2. The user interface 80 physically corresponds to the input device 8e and the monitor 8h illustrated in FIG. 2, and the interface 81 physically corresponds to the I/O 8f illustrated in FIG. 2.

A time chart creation unit 82 receives necessary information from the user by using a graphical user interface (GUI) or the like displayed on the user interface 80, and creates the time chart. In this embodiment, the time chart creation unit 82 includes a chart creation unit 82a, a servo axis operation adding unit 82b, and a servo axis operation scheduled finish time point calculation unit 82c.

The chart creation unit 82a creates a chart indicating a waveform of the operation of the servo axis and a chart for plotting the operation of the input/output device based on an input from the user. The waveform of the operation of the servo axis is a speed chart for plotting a speed or a displacement chart for plotting a displacement. In general, the displacement chart is obtained by subjecting the speed chart to integration in terms of time, and hence the chart creation unit 82a may be configured to create any one of the speed chart and the displacement chart. In this embodiment, the chart creation unit 82a is capable of creating any one thereof in accordance with the user's designation. Further, the chart for plotting the operation of the input/output device is to describe a change of an input predicted with respect to the time axis for the input device, and to describe a change of an output from the controller 2 with respect to the time axis for the output device.

Note that, it is preferred that the chart creation unit 82a be able to specify that the operation of the device, which is described in each chart, is to be started in a manner linked with a status change of another device. With such a specification, an operation involving a plurality of devices for activating, for example, the servo axis in response to depression of the switch is described. Such a relationship that the operation of a given device is thus linked with the status change of another device may be referred to as, for example, "linkage" or "association".

In addition, in this embodiment, the chart creation unit 82a includes the servo axis operation adding unit 82b. The servo axis operation adding unit 82b can easily create an operation waveform of the servo axis, and adds the operation waveform defined in advance to the time chart when the user conducts an operation with respect to an arbitrary position in the time axis of the time chart one time. The user's specification may be made by, for example, designating one point in the time axis displayed on the user interface 80 for an arbitrary servo axis included in the time chart by a pointing device, or by inputting a start time point of the operation waveform to be added for a given servo axis by a keyboard or the like. Further, examples of the operation waveform defined in advance include an operation waveform having a predetermined acceleration, a predetermined speed, and a predetermined moving amount. Those predetermined acceleration, speed, and moving amount may be set by default, or may be set in advance by the user. The predetermined acceleration, speed, and moving amount may be common to all the servo axes, but when a plurality of servo axes exist, it is preferred that the predetermined acceleration, speed, and moving amount be set uniquely to each of the servo axes.

When the operation waveform of the servo axis is created by the chart creation unit 82a, the servo axis operation scheduled finish time point calculation unit 82c calculates a servo axis operation scheduled finish time point serving as a finish time point of the operation based on the operation waveform on the timing chart, and records the servo axis operation scheduled finish time point in the time chart. For example, the servo axis operation scheduled finish time point calculation unit 82c may calculate the servo axis operation scheduled finish time point based on operation information including the acceleration, speed, and moving amount in the operation waveform of the servo axis. Note that, the servo axis operation scheduled finish time point calculation unit 82c is configured to allow the time chart creation apparatus 8 to automatically calculate the servo axis operation scheduled finish time point, but instead thereof, or in addition thereto, a servo axis operation scheduled finish time point designation unit may be provided to allow the user to designate the servo axis operation scheduled finish time point. When the time chart creation apparatus 8 is configured to automatically calculate the servo axis operation scheduled finish time point, the user can create the time chart without being conscious of the operation finish time point of the servo axis, which facilitates the creation of the time chart. In contrast, when the user designates the servo axis operation scheduled finish time point, it is possible to designate a time point with a margin as the servo axis operation scheduled finish time point, and hence a lag between the actual time and the internal time described later can be eliminated or suppressed to a small level.

The halt instruction setting unit 85 sets the halt instruction at an arbitrary time point of the time chart. Only one halt instruction or a plurality of halt instructions may be set for each time chart.

The chart created by the chart creation unit 82a, the servo axis operation scheduled finish time point calculated by the servo axis operation scheduled finish time point calculation unit 82c, and the halt instruction set by the halt instruction setting unit 85 are stored in a time chart storage unit 83 as electronic data forming the time chart or electronic data provided separately from the time chart. Further, the time chart created in such a manner may be read by a time chart display unit 84, and may be displayed for the user by the user interface 80, which allows confirmation of contents thereof.

The information including the time chart stored in the time chart storage unit 83 is transferred to the controller 2 through the interface 81 as necessary.

### <Operation of device control system according to the first embodiment>

Next, the operation of the device control system 1 according to this embodiment is described by taking an example of a specific time chart.

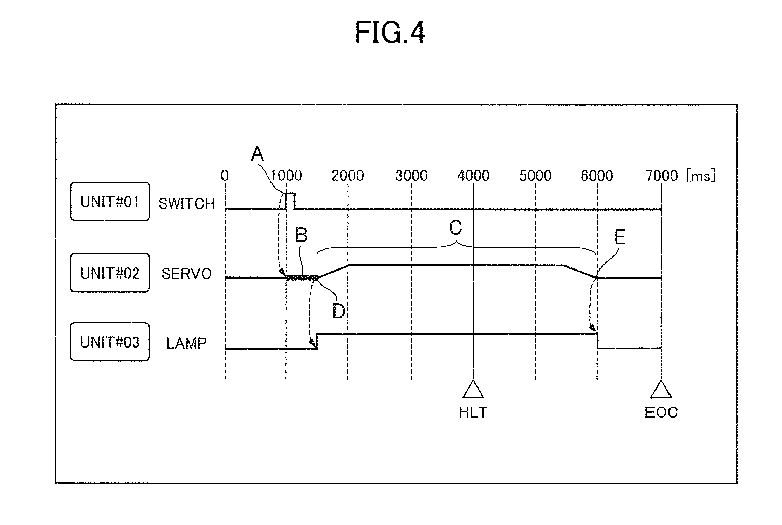

FIG. 4 is an example of the time chart created by the time chart creation apparatus 8 and executed by the controller 2. In the time chart, the horizontal axis represents the time axis, and in the vertical axis, respective devices to be controlled are illustrated in order. Curves illustrated in association with the respective devices indicate the statuses of the respective devices. The switch 6 indicated as "UNIT#01" and the lamp 7 indicated as "UNIT#03" are input/output devices, and hence the curve in an upper position means the low impedance (connected), and the curve in a lower position means the high impedance (disconnected). Further, the curve illustrated for the servo axis, in this case, the linear slider 5, indicated as "UNIT#02" means a speed of a slider.

In the operation intended by the time chart, the switch 6 is turned on at a time point at which 1,000 ms has elapsed since a start (point A in the figure), a timer is activated in the manner linked with such a status change of the switch 6, and after standing by for 500 ms that is a set time period (bold line B in the figure), the servo axis (linear slider 5) is moved by a predetermined moving amount (segment C in the figure), while at the same time, the lamp 7 is turned on in a manner linked with a movement start time point of the servo axis (point D in the figure) and turned off in a manner linked with a movement finish time point of the servo axis (point E in the figure). Further, the halt instruction indicated as HLT in the figure is set at a time point of 4,000 ms from the start. The finish time of the time chart is set at a time point of 7,000 ms, and is indicated as EOC in the figure.

Broken line arrows illustrated in the timing chart indicate one device operating in a manner linked with the operation of another device, that is, the status change thereof. In other words, the broken line arrows indicate the linkage (or association). It should be understood that the representation using the arrow is merely an example, and that one device operating in the manner linked with the status change of another device may be freely expressed. Such operations may be linked with each other in any manner as long as a given operation of one device is associated with a given operation of another device in some form, and such association may not necessarily be illustrated explicitly when the time chart is visually illustrated as in FIG. 4. Further, the example of the time chart illustrated in FIG. 4 exemplifies a case where the start of the operation of the servo axis is associated with the status change of the switch 6, but the association may be established between the servo axes or devices other than the servo axes. Alternatively, an end of the operation of the servo axis may be associated with the status change of another device. In addition, the status change of one device may be linked with another operation of the same one device itself. For example, in such a case where the servo axis is moved by a fixed amount in a forward direction and then immediately starts moving in a reverse direction at a timing of the finish of the movement, the status change of one device is to be linked with another operation of the same one device itself.

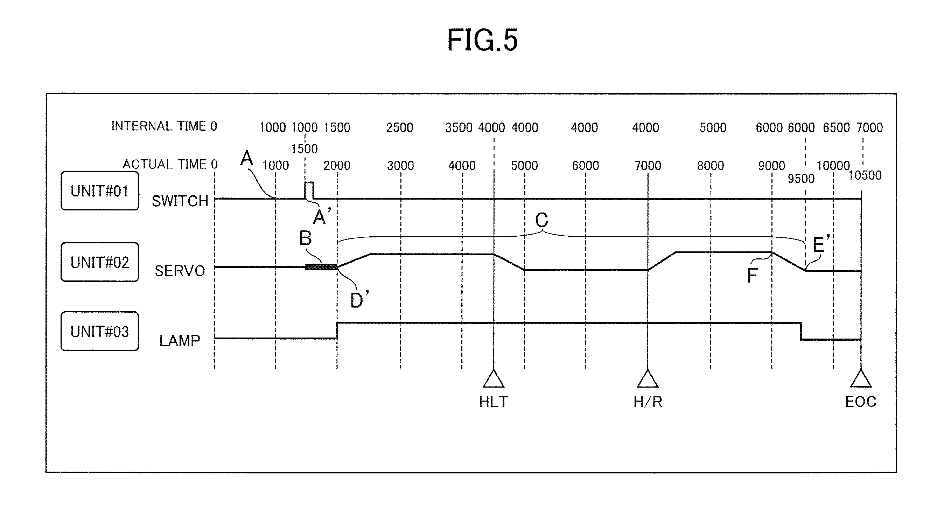

FIG. 5 is a diagram for illustrating an example of the actual operation of the device control system 1 according to this embodiment based on the time chart illustrated in FIG. 4. The respective curves illustrated in the figure indicate the actual operations of the switch 6, the linear slider 5 serving as the servo axis, and the lamp 7, which are actual devices, in the format of the time chart. Further, in the time axis, two kinds of time, namely, the actual time and the internal time that have elapsed since an execution start time point of the time chart are illustrated in parallel with each other. In the example illustrated in FIG. 5, the overriding factor is 1, and the actual time and the internal time are assumed to progress at the same rate.

The time chart execution unit 25 of the controller 2 interprets the operations of the respective devices described in the time chart illustrated in FIG. 4, and executes the operations successively. In this case, on the time chart of FIG. 4, the switch is supposed to be turned on at the point A at which the time point of the internal time is 1,000 ms, but the switch remains off in the actual operation illustrated in FIG. 5. Thus, the device operation finish determination unit 26 of the controller 2 determines that the operation of the switch has not been finished, and the counting of the internal time is stopped by the internal time stopper 24d. Therefore, the actual time progresses, while the internal time stops progressing.

The switch is turned on at a time point A' at which the actual time is 1,500 ms, which causes the counting of the internal time to be restarted, and the internal time starts progressing again. At the same time, the timer (B in the figure) is activated in a manner linked with the switch, and at a time point D' after another 500 ms has elapsed, the servo axis is activated and the lamp is turned on. The actual time is 2,000 ms at this time point, while the internal time is 1,500 ms as illustrated in the time chart of FIG. 4.

At the time point (time point at which the actual time is 4, 500 ms) at which the internal time has reached 4,000 ms, the counting of the internal time is stopped by the internal time halting unit 27 in accordance with the halt instruction. Therefore, the internal time stops progressing again. Further, the hold signal is output to the servo axis, and hence as illustrated in FIG. 5, the servo axis decelerates to stop its operation.

In addition, assuming that a halt instruction cancellation signal indicated as H/R is input at a time point at which the actual time is 7,000 ms, the internal time halting unit 27 restarts the counting of the internal time and cancels the outputting of the hold signal to the servo axis. Therefore, the internal time starts progressing again, and the servo axis also restarts the halted operation. The deceleration and the acceleration of the servo axis during the halt may be executed by a control apparatus (servo controller 3) of the servo axis itself setting an acceleration/deceleration operation with a predetermined deceleration and a predetermined acceleration, or executed by the control apparatus of the servo axis after the controller 2 sets the acceleration/deceleration operation by automatically computing the deceleration, the acceleration, and the like based on an allowable value or the like of the servo axis set in advance.

At a time point F at which the internal time has reached a time point of 6,000 ms at which the operation of the servo axis has been finished on the time chart of FIG. 4, the operation of the servo axis has not been finished yet in FIG. 5. Therefore, the counting of the internal time is stopped again by the device operation finish determination unit 26. Then, the actual operation of the servo axis is finished at a time point E' at which the actual time is 9,500 ms, and hence the device operation finish determination unit 26 restarts the counting of the internal time, and at the same time, the lamp is turn off.

After that, at a time point at which the internal time has reached 7,000 ms, the execution of the time chart is brought to an end. At this time, the actual time is 10,500 ms in the example of FIG. 5.

As described above by taking FIG. 5 as an example, when attention is given to the internal time, it is understood that all the operations of the switch, the servo axis, and the lamp are executed as illustrated in the time chart of FIG. 4. Meanwhile, the actual time does not always match the internal time, and a lag occurs between the actual time and the internal time whenever the counting of the internal time is stopped by the device operation finish determination unit 26 and the internal time halting unit 27.

Note that, the time chart display unit 84 may display the time chart so as to allow the user to recognize an execution status of the time chart in synchronization with the execution of the time chart conducted by the time chart execution unit 25. For example, the time chart display unit 84 may display a line (for example, vertical line) indicating a time point of the execution, and cause the line to move to the right of the time chart (time elapsing direction) or cause the display of the time chart to move to the left. By conducting such display, it is possible to allow the user to recognize a time point on the time chart at which the time chart is being executed. In this case, when the internal time counter 24c is stopped, the time chart display unit 84 can also allow the stopped state to be recognized by stopping changing display of the time chart. Further, the time chart display unit 84 can also allow the user to recognize the progress status of the internal time by displaying the internal time. In addition, the time chart display unit 84 may display the actual time and/or a deviation amount between the actual time and the internal time together with or in place of the internal time. This allows the user to recognize a time interval or the like required for the processing on the actual time axis as well.

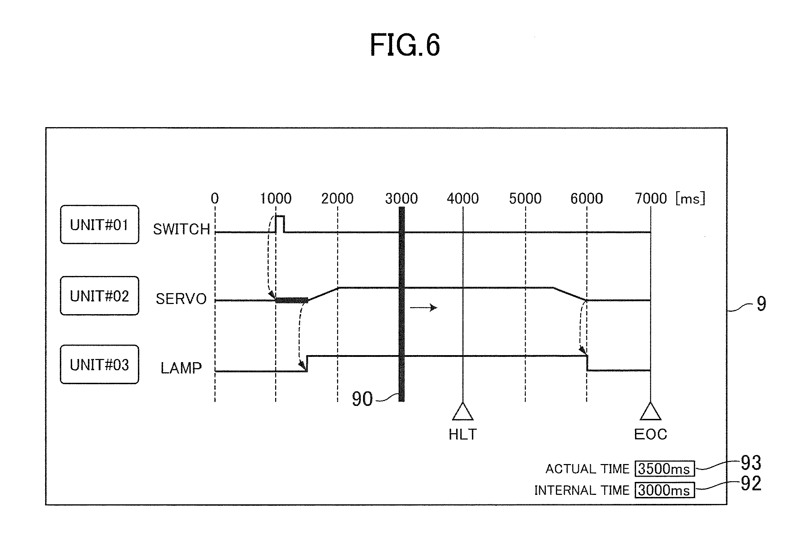

FIG. 6 is an example of such display of the execution status of the time chart conducted by the time chart display unit 84. In FIG. 6, a screen 9 displayed on the user interface 80 (monitor 8h) is illustrated. On the screen 9, the same time chart as the one illustrated in FIG. 4 is displayed, and on the time chart, a line 90 indicating a current time point of the execution is displayed so as to be superimposed thereon. As indicated by the arrow in FIG. 6, the line 90 moves to the right on the screen 9 as the internal time progresses. Further, when the counting of the internal time is stopped to stop the progress thereof, the line 90 also stops moving. This allows the user to immediately recognize at which time point the controller 2 is executing the time chart or whether or not the counting of the internal time is stopped. Further, an internal time display portion 92 and an actual time display portion 93 are arranged on the bottom right of the screen 9, and display the internal time and the actual time, respectively. The time point indicated in FIG. 6 is the time point at which the internal time is 3,000 ms and the actual time is 3,500 ms in FIG. 5.

Note that, in a case of displaying the execution status of the time chart by moving the line 90, moving the time chart itself, or the like, synchronization may not be necessarily maintained correctly between the display conducted by the time chart display unit 84 and the execution status of the time chart on the controller 2, that is, the progress status of the internal time. In general, a refresh rate of the monitor 8h used as the user interface 80 is approximately several tens of Hz to several hundreds of Hz, and is far slower than a counting cycle of the internal time on the controller 2. Therefore, it suffices that an update timing of the display conducted by the time chart display unit 84 is a cycle approximately equal to or slower than the refresh rate. Further, as long as the user only needs to confirm that the time chart is being executed, it is not necessary to maintain the synchronization between the display conducted by the time chart display unit 84 and the internal time. That is, in the above-mentioned example, even in a case where the time chart display unit 84 moves the line 90 to the right without maintaining synchronization with the internal time from the time point at which the execution of the time chart is started, the user can at least grasp that the time chart is being executed and grasp a rough execution time point. In this case, it is preferred that the time chart display unit 84 stop moving the line 90 until the halt instruction cancellation signal is input when the line 90 reaches the time point at which the halt instruction is set. It should be understood that the execution status of the time chart can be conveyed to the user more accurately by maintaining the synchronization between the display conducted by the time chart display unit 84 and the internal time, which is more preferred.

### <Operation flow of controller according to the first embodiment>

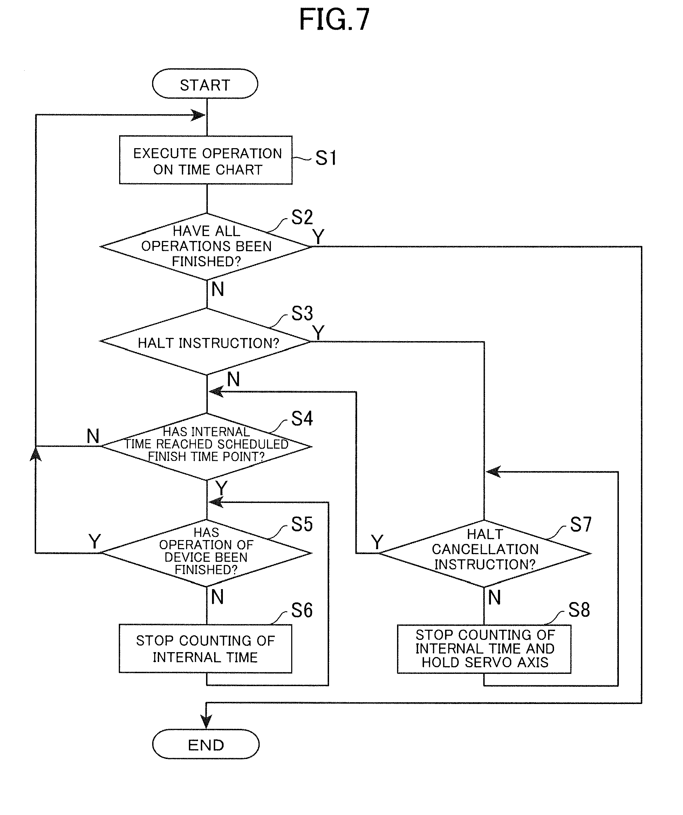

FIG. 7 is a flowchart for illustrating an operation conducted when the time chart is executed by the controller 2 according to this embodiment.

When starting the execution of the time chart, in Step S1, the controller 2 starts to count the internal time, and interprets and executes the operation described in the time chart in accordance with the internal time. Then, in Step S2, the controller 2 determines whether or not all the operations have been finished. When all the operations have been finished, the control is brought to an end, and otherwise the procedure advances to Step S3.

In Step S3, the controller 2 determines whether or not the internal time has reached the time point at which the halt instruction is set. When the internal time has not reached the time point, the procedure advances to Step S4.

In Step S4, the controller 2 determines whether or not the internal time has reached the scheduled finish time point of the operation of the device. When the internal time has not reached the scheduled finish time point, the procedure returns to Step S1, to keep executing the operation on the time chart. When the internal time has reached the scheduled finish time point of the operation of the device, in Step S5, the controller 2 determines whether or not the actual operation of the device has been finished. When the actual operation has been finished, the procedure returns to Step S1. On the other hand, when the actual operation has not been finished, the procedure advances to Step S6, to stop the counting of the internal time. The procedure returns from Step S6 to Step S5, and hence the stopping of the counting conducted in Step S6 is continued until it is determined in Step S5 that the operation of the device has been finished.

On the other hand, when the controller 2 determines in Step S3 that the internal time has reached the time point at which the halt instruction is set, the procedure advances to Step S7. In Step S7, the controller 2 determines whether or not the halt cancellation instruction has been input. When the halt cancellation instruction has not been input, the procedure advances to Step S8, to stop the counting of the internal time and output the hold signal to the servo axis. The procedure returns from Step S8 to Step S7, and hence the holding and the stopping of the counting conducted in Step S8 are continued until it is determined in Step S7 that a halt cancellation instruction has been input.

When the halt cancellation instruction is input in Step S7, the procedure advances to Step S4. The subsequent operations are executed as has already been described.

When the controller 2 conducts the above-mentioned operation, the counting of the internal time and the stopping thereof follow the actual operation of the device even if the actual operation of the device is not exactly the same as the operation described in the time chart, and hence an operation with an improved degree to which a timing expressed by the time chart is reflected on actual control is conducted. Further, even when the operation is halted by the user's designation, the synchronization in the operation timing between devices described in the time chart is maintained.

### <Configurations of controller and time chart creation apparatus according to the second embodiment>

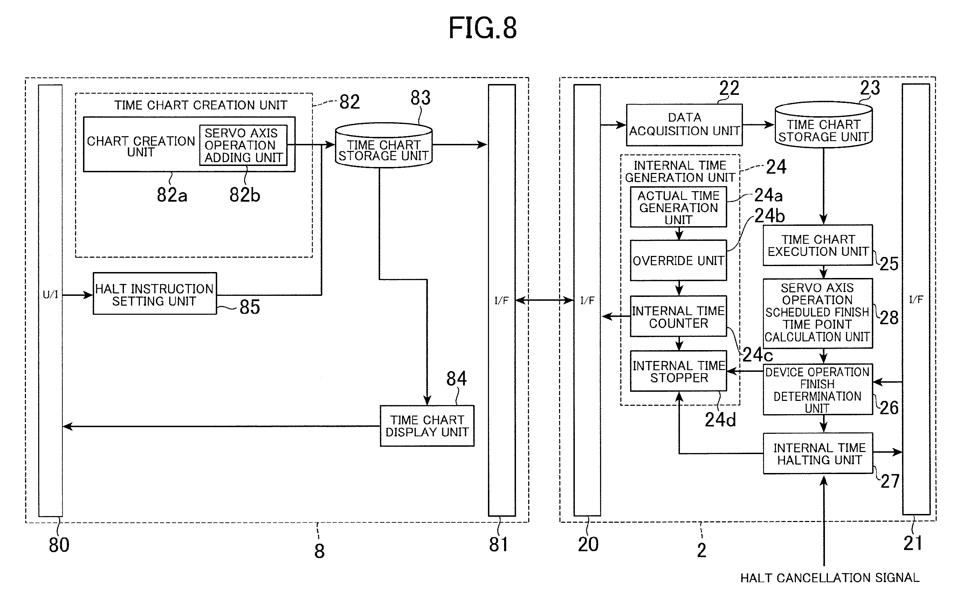

FIG. 8 is a functional block diagram of a controller 2 and a time chart creation apparatus 8 according to a second embodiment of the present invention. In this embodiment, the same components as those of the previous embodiment are denoted by the same reference symbols, and duplicate descriptions thereof are omitted. The controller 2 according to this embodiment is different from the controller 2 according to the previous embodiment in that the controller 2 according to this embodiment is provided with a servo axis operation scheduled finish time point calculation unit 28 between the time chart execution unit 25 and the device operation finish determination unit 26. Further, the time chart creation apparatus 8 according to this embodiment is different from the time chart creation apparatus 8 according to the previous embodiment in that the servo axis operation scheduled finish time point calculation unit 82c is eliminated.

In this embodiment, the servo axis operation scheduled finish time point calculation unit 28 is provided to the controller 2, and hence the finish time point of the operation of the servo axis is automatically calculated by the controller 2, and used for the determination conducted by the device operation finish determination unit 26. Therefore, it is not necessary to include a servo axis operation finish time point in the time chart created by the time chart creation apparatus 8. The servo axis operation scheduled finish time point calculation unit 82c is in turn omitted from the time chart creation apparatus 8. Accordingly, it is also possible to reduce a data communication amount between the time chart creation apparatus 8 and the controller 2. However, it is also possible to provide the controller 2 with the servo axis operation scheduled finish time point calculation unit 28 while providing the time chart creation apparatus 8 with the servo axis operation scheduled finish time point calculation unit 82c, and to cause any one thereof to operate or cause both thereof to complementarily calculate the servo axis operation finish time point.

Further, the servo axis operation scheduled finish time point calculation unit 28 may include the calculated operation scheduled finish time point in advance in the time chart stored in the time chart storage unit 23. However, as in this embodiment, if the operation scheduled finish time point is calculated in accordance with actual execution conducted by the time chart execution unit 25, it is possible to reduce a data amount of the time chart itself.

Note that, in this embodiment, in addition to the servo axis operation scheduled finish time point calculation unit 28 of the controller 2, the servo axis operation scheduled finish time point designation unit may be provided to allow the user to designate the servo axis operation scheduled finish time point. Then, the device operation finish determination unit 26 may preferentially use the user's designation when the designated servo axis operation scheduled finish time point is included in the time chart, that is, when the user's designation exists, and otherwise may use the servo axis operation scheduled finish time point calculated by the servo axis operation scheduled finish time point calculation unit 28. With this configuration, when there is no particular need to designate the servo axis operation scheduled finish time point, the controller automatically calculates the servo axis operation scheduled finish time point, which facilitates the creation of the time chart, and a servo axis operation scheduled finish completion time point can be designated as necessary. Accordingly, when the time point is designated with a margin as the servo axis operation scheduled finish time point, a lag between the actual time and the internal time can be eliminated or suppressed to a small level.

Note that, the operation of the device control system 1 according to this embodiment is the same as that of the previous embodiment with no particular change, and hence a duplicate description thereof is omitted.

Each of the configurations in the embodiments above is described as an example, and the invention disclosed in this specification is not limited to those specific configurations themselves. Various modifications may be made by a person skilled in the art to the disclosed embodiments. For example, the shape, number, and arrangement of each member or a part thereof may be appropriately changed. Further the control illustrated in the flowcharts may also be appropriately replaced by one having the same functions. It is intended that the technical scope of the invention disclosed in this specification cover all such modifications.

## Claims

1. A controller configured to control a device comprising a servo axis based on a time chart, comprising:
a time chart execution unit configured to output a control signal serving as a signal for controlling an operation of the device based on a description for controlling the operation of the device included in the time chart;
an internal time counter configured to count an internal time corresponding to a time on a time axis of the time chart; and
an internal time stopper configured to stop, for at least one device as the device, the counting of the internal time conducted by the internal time counter until an operation of the at least one device is finished when the operation of the at least one device has not been finished after a scheduled finish time point of the operation of the at least one device on the time chart.

2. The controller according to claim 1, wherein the internal time stopper stops the counting conducted by the internal time counter when the device comprises a plurality of the devices and when an operation of any one of the plurality of the devices has not been finished.

3. The controller according to claim 1 or 2, further comprising a servo axis scheduled finish time point calculation unit configured to calculate a servo axis operation scheduled finish time point serving as a scheduled finish time point of an operation of the servo axis based on the description for controlling the operation of the servo axis included in the time chart.

4. The controller according to any one of claims 1 to 3, further comprising an internal time halting unit configured to stop the counting of the internal time conducted by the internal time counter in accordance with a halt instruction set on the time chart, and restart the counting of the internal time conducted by the internal time counter in accordance with a halt cancellation signal.

5. The controller according to claim 4, wherein the internal time halting unit stops operations of all the servo axes in accordance with the halt instruction.

6. A time chart creation apparatus to be connected to the controller of claim 1, comprising at least one of:
a servo axis operation scheduled finish time point calculation unit configured to calculate a servo axis operation scheduled finish time point serving as a scheduled finish time point of an operation of the servo axis included in the time chart; and
a servo axis operation scheduled finish time point designation unit configured to designate the servo axis operation scheduled finish time point.

7. A time chart creation apparatus to be connected to the controller of claim 4 or 5, comprising a halt instruction setting unit configured to set the halt instruction on the time chart.

8. A time chart creation apparatus to be connected to the controller of any one of claims 1 to 5, comprising a servo axis operation adding unit configured to conduct one operation at an arbitrary position in a time axis within a chart for describing an operation of the servo axis, to thereby add a description for controlling the operation of the servo axis using a waveform defined in advance to the time chart.

9. A computer program for causing a computer to function as the time chart creation apparatus of any one of claims 6 to 8.

10. A computer-readable information storage medium having the computer program of claim 9 stored thereon.
